# EUROPÄISCHE PATENTSCHRIFT

(11) **EP 0 750 805 B1**
(45) Veröffentlichungstag und Bekanntmachung des Hinweises auf die Patenterteilung: **15.04.1998**
(21) Anmeldenummer: 94921617.0
(22) Anmeldetag: 21.06.1994
(51) Int. Cl.: H02K 5/04, H02K 5/167, H02K 9/22, H02K 1/17, F16C 37/00, F16C 35/02

(54) **WÄRMEGESCHÜTZTES MOTORGEHÄUSE MIT METALLMANTEL UND KUNSTSTOFFSCHILD**
HEAT-PROTECTED MOTOR HOUSING WITH METALLIC CASING AND PLASTIC END PLATE
BOTIER DE MOTEUR THERMOPROTEGE A ENVELOPPE METALLIQUE ET FLASQUE EN MATIERE PLASTIQUE

(30) Priorität: 24.06.1993 DE 4321027
(43) Veröffentlichungstag der Anmeldung: 02.01.1997
(73) Patentinhaber: ITT Automotive Europe GmbH, 60488 Frankfurt (DE)
(72) Erfinder: HEINZE, Mark, D-74366 Kirchheim/Neckar (DE); CSERMAK, Martin, D-74321 Bietigheim-Bissingen (DE); BAUMEISTER, Udo, D-74379 Ingersheim (DE); WALTHER, Bernd, D-74321 Bietigheim-Bissingen (DE); BÜHLER, Roland, D-74081 Heilbronn (DE)
(86) Internationale Anmeldenummer: EP9402019
(87) Internationale Veröffentlichungsnummer: WO9500998

(56) Entgegenhaltungen:
- EP-A- 0 360 546
- WO-A-87/07097
- DE-A- 1 488 596
- DE-A- 2 535 210
- FR-A- 2 377 723
- FR-A- 2 419 604
- GB-A- 1 122 951
- GB-A- 1 261 859
- GB-A- 2 062 365
- US-A- 4 823 032

## Beschreibung

Die Erfindung betrifft einen Elektromotor insbesondere für Wischersysteme. Bei derartigen, in großen Stückzahlen hergestellten Motoren ist insbesondere darauf zu achten, daß sie langlebig sind und preiswert hergestellt werden können. Dabei ist bei der Auswahl der zu verwendenden Materialien auf die an die Eigenschaften des Motors zu stellenden Forderungen sowie die Materialeigenschaften des verwendeten Materials zu achten. So können beispielsweise durch Kunststoff relativ komplizierte Formen gespritzt werden. Andererseits ist Kunststoff ein schlechter Wärmeleiter. Metall als guter Wärmeleiter mit niedrigem magnetischen Widerstand ist wiederum für Korrosion anfällig. Die Kombination von Kunststoff und Metall kann wiederum zu Schwierigkeiten wegen der unterschiedlichen Ausdehnungseigenschaften führen. Weiterhin ist darauf zu achten, daß die aus unterschiedlichen Materialien bestehenden Elemente mit hinreichender Festigkeit miteinander verbunden sind. Andererseits sollen diese Elemente auch aus Umweltgesichtspunkten hinreichend voneinander trennbar sein, falls der Motor schließlich wieder aus dem Betrieb genommen wird.

Es sind schon eine ganze Reihe von Motorgehäusen bekannt geworden, bei denen hinsichtlich der einzelnen Motorelemente sowohl Kunststoff als auch Metall Verwendung findet. So zeigt beispielsweise die DE-OS 30 38 135 das Gehäuse eines elektrischen Kleinmotors, bei dem ein zylinderförmiger Metallmantel vorgesehen ist, an dem ein Lagerschild aus Kunststoff befestigt ist. Gleichzeitig ist der Motorschild mit einem Wärmeableiter aus Metall versehen, der an dem Motorlager angreift. Dabei kann der Wärmeableiter an dem metallischen Gehäusemantel anliegen, wodurch der Wärmeableitungseffekt weiter verstärkt wird.

Die Erfindung geht daher aus von einem Motorgehäuse, der sich aus dem Oberbegriff des Anspruchs 1 ergebenden Gattung. Aufgabe der Erfindung ist es, durch einen geeigneten Einsatz der Werkstoffe Metall und Kunststoff für einen preiswerten, hochbelastbaren und langlebigen Elektromotor, insbesondere für Scheibenwischanlagen zu sorgen, der überdies noch eine große Wärmeableitfähigkeit der durch die Arbeit des Motors entstehenden Wärme aufweist.

Die Aufgabe wird durch die sich aus dem kennzeichnenden Teil des Anspruchs 1 ergebende Merkmalskombination gelöst. Die Erfindung besteht im Prinzip also darin, den Metallmantel mit dem Wärmeableitungsteil einstückig zu verbinden und an das so gebildete Gerüst den Motorschild einschließlich Lager anzuspritzen. Ein besonderer Vorteil liegt dabei darin, daß zum einen durch den Materialübergang zwischen Metallmantelteil und Wärmeableitungsteil die in dem Motorlager entstehende Wärme besonders gut auf den großflächigen Metallmantel abgeleitet werden kann. Andererseits erhält man durch das Anspritzen oder Angießen des Lagerschildes eine besondere Festigkeit zwischen Lagerschild und Metallmantelteil. Darüberhinaus sorgt der Spritz- bzw.Gießvorgang für eine große Dichtheit des Gehäuseinnenraums gegenüber der Umgebung. Bei der Ausformung des Kunststoff-Lagerschildes wird man darauf sehen, daß einerseits der Kunststoff aus Festigkeitsgründen Metallteile hintergreift. Andererseits sollte aber das Wärmeableitungsteil nicht vollständig mit Kunststoff umgeben sein um die Wärmeableitung nicht zu verschlechtern. Man wird daher bevorzugt dafür sorgen, daß das Wärmeableitungsteil möglichst frei von einer Kunststoffumspritzung bleibt. Das bedeutet andererseits, daß für die Korrosionsfestigkeit des Metalls gesorgt werden muß. Dabei ist es vorteilhaft, wenn der Kunststoff zumindest an den Stellen des Metalls angebracht wird, welche aufgrund des Fertigungsverfahrens zu einer Korrosionsbildung neigen.

Je nach Beanspruchung ist es möglich den Kunststofflagerkörper, in dem schließlich die Ankerwelle des Motors läuft, direkt durch den Kunststofformvorgang mit auszugestalten. In einer Reihe von Fällen kann aber die Belastung des Lagerkörpers derart groß sein, daß die Eigenschaften des für den Lagerschild verwendeten Kunststoffs die Belastungen (beispielsweise hinsichtlich der Erwärmung) nicht mehr aushalten. In diesem Falle empfiehlt es sich, in Weiterbildung der Erfindung, gemäß der Merkmalskombination nach Anspruch 2, vor dem Kunststofformvorgang ein Sinterlager in das Motorgehäuse einzulegen, welches anschließend durch den Kunststoff mit in den Kunststofflagerkörper eingeformt wird. Die Vorteile derartiger Sinterlager sind bekannt und sollen an dieser Stelle nicht näher erläutert werden.

Die beschriebene Ausgestaltung hat den Vorteil, daß zur Wärmeabstrahlung eine vergleichsweise große Metallfläche der Umluft ausgesetzt ist. Andererseits kann durch die vergleichsweise kleinen Grenzflächen zwischen Metall und Kunststoff die Verbindungskraft zwischen den beiden Gehäuseelementen zu gering sein. Um hier vorsorglich Abhilfe zu schaffen, dienen die Merkmale nach Anspruch 3. Durch die sich längs der Mantelfläche des Metallmantels erstreckenden Stege wird erreicht, daß die Übedeckungsflächen zwischen Kunststoff und Metall in Bereiche verlegt werden, die hinsichtlich der Wärmeabstrahlung ohnedies unkritisch sind, also in einem von dem Lager entfernten Bereich. Damit ziehen sich über die Mantelfläche des Motors Stege, die in ihrer Wirkung Haltebändern vergleichbar sind, die den Motorschild am gegenüberliegenden Ende des Metallmantels verankern. Besonders vorteilhaft in Weiterbildung der Erfindung ist es hier, wenn gemäß der Merkmale nach Anspruch 4 an dem Verankerungsende der Stege ein umlaufender Kunststoffring vorgesehen ist, der die Stege einstückig aufnimmt und gleichzeitig umlaufend die Stirnfläche des Metallmantels hintergreift.

Die Stege selbst können längs der Außenfläche des Metallmantels verlaufen, was eine ganze Reihe von Vorteilen bringen kann, wie weiter unten noch erläutert wird. Im Rahmen der Erfindung kann es sich aber auch als sehr vorteilhaft erweisen, daß gemäß den Merkmalen nach Anspruch 5 zumindest ein oder mehrere Stege längs der Innenfläche des Metallmantels verlaufen. Selbstverständlich ist auch denkbar, daß derartige Stege zueinander parallel an Innen- und Außenfläche einander gegenüberliegend verlaufen und diese Stege an den Stirnflächen des Metallmantels durch eine Kunststoffüberbrückung, wie den oben genannten Kunststoffring miteinander verbunden sind.

Bei derartigen Innenstegen ist es besonders zweckmäßig, wenn die sich aus Anspruch 6 ergebende Merkmalskombination angewendet wird. Das bedeutet, daß an die Innenstege gleichzeitig Kunststofflaschen zur späteren Halterung der Magnete angefügt werden. Diese können getrennt an der Innenfläche des Metallmantels angespritzt sein, aber vorteilhaft gemäß Anspruch 7 auch einstückig mit den Innenstegen verbunden sein.

Ein weiteres Kunststoffelement, welches in den Innenraum eingefügt sein kann, ergibt sich gemäß der Merkmalskombination nach Anspruch 8. Selbstverständlich können auch diese Anschläge einstückig mit den weiter oben genannten im Innenraum des Gehäuses befindlichen Kunststoffelementen verbunden und im gleichen Formvorgang herausgeformt sein.

An sich können mit einem geeigneten Befestigungsverfahren, wie Nieten, Schweißen oder ähnliches, Befestigungselemente an dem Metallgehäuse befestigt werden. Die vorliegende Erfindung schlägt hierzu allerdings in vereinfachender Weiterbildung die Merkmalskombination nach Anspruch 9 vor. Danach werden zur Befestigung des Motorgehäuses vom Motor abstehende Metallappen herausgeschnitten. Derartige Lappen haben an sich den Nachteil, daß Feuchtigkeit in den Innenraum des Motors eindringen kann. Hierzu dient der die Lappen umgebende und am Gehäuse anliegende Kunststoffmantel der den Gehäuseinnenraum gegenüber den Umwelteinflüssen abdichtet.

Der Metallmantel kann wiederum mit anderen Kunststoffelementen einstückig verbunden sein, wie beispielsweise den oben beschriebenen Stegen oder dem Kunststoffring.

Aus der eingangs genannten DE-OS 30 38 135 ist es bekannt, das Wärmeableitungsteil vorgefertigt zwischen Kunststoffschild und Lager bzw. Metallmantel einzuklemmen. In vorteilhafter Weise schlägt hier die Erfindung einen anderen Weg vor, in dem hier der Wärmeableitkörper gemäß Anspruch 10 aus einer aus dem Metallmantel ausgeschnittenen Metallasche gebildet ist, die vorzugsweise gekrümmt oder gewunden sich zu dem Lagerkörper am Motorschild hin erstreckt. Durch die gewundene Form wird zum einen die Belastung des Materials durch den Formvorgang verringert. Andererseits wird zu Kühlzwecken die Länge der Metallasche hinreichend vergrößert, so daß eine verbesserte Kühlung gegeben ist.

Eine besonders einfache Ausführungsform ergibt sich dabei gemäß der Merkmalskombination nach Anspruch 11, da hierdurch die an den Metallaschen durchzuführende Metallverformung vergleichsweise gering ist. Die Laschen selbst bilden dabei nur aus dem Metallmantel herausgeschwenkte Teile, so daß das Metall weder gefaltet noch geknickt wird. Weiterhin erhält man durch diese Maßnahme in Gehäuselängsrichtung Metallaschen, die beliebig breit gewählt sein können, so daß hier die Laschen von einer Breite gewählt werden können, die dem gewünschten Kühleffekt entspricht.

Hinsichtlich des Lagerkörpers bilden die gekrümmten Metallaschen Abschnitte eines Rings, so daß durch die Krümmungsabschnitte im wesentlichen ein Metallring entsteht, der den Lagerkörper hält und der auch zu Festigkeitszwecken bei der Formung des Lagerkörpers durch Kunststoff in den Lagerkörper zumindest teilweise eingeformt sein kann. Entsprechendes gilt auch hinsichtlich des Lagerschildes selbst, so daß zumindest auch ein Teil der Metallaschen in den Lagerschild eingeformt sein kann.

Durch diese Konstruktion wird einerseits eine große Tragfähigkeit des Lagers erreicht, da der Metallring ja einstückig mit dem Metallmantel verbunden ist, andererseits wird hierdurch die Wärmeleitfähigkeit erheblich vergrößert, da über die breiten Metallaschen erhebliche Wärmemengen in den Metallmantel abgeführt werden können.

Zur Erhöhung der Festigkeit des Lagers kann zusätzlich noch die Merkmalskombination nach Anspruch 12 angewendet werden. Dabei kann entsprechend den Merkmalen nach Anspruch 13 der durch die Enden der Metallaschen gebildete Metallring ein Sinterlager umfassen, welches gemäß Anspruch 14 auch als Kalottenlager ausgestaltet sein kann. Dabei muß allerdings sichergestellt werden, daß das Kalottenlager innerhalb des Metallrings auch dann schwenkbar ist, wenn der Metallring in dem Lagerkörper durch Kunststoff umspritzt ist.

Weiter oben war schon geschildert worden, daß die Kunststoffstege zur Lagesicherung gegenüber dem Metallmantel in einen hintergreifenden Kunststoffring münden können. Eine Befestigung der Stege kann aber auch durch die sich aus Anspruch 15 ergebende Merkmalskombination erreicht werden, indem gleichzeitig der Mantel an den Metallappen als Verankerung für einen Kunststoffsteg dient.

Der Metallmantel kann beispielsweise durch Gießen, Tiefziehen oder eine andere Formgebungsmaßnahme gebildet sein. Eine besonders einfache und in Verbindung mit den angeformten Kunststoffelementen vorteilhafte Maßnahme zur Ausgestaltung des Metallmantels kann in der Merkmalskombination nach Anspruch 16 bestehen. Dabei wird der Metallmantel aus einem einfachen gerollten Blechteil gebildet, welcher an der Stoßstelle der Mantelfläche hintergreifende Verbindungslappen besitzt. Diese können beispielsweise schwalbenschwanzförmig ausgestaltet sein. Diese Ausgestaltung des Metallmantels ist vor allen Dingen deshalb vorteilhaft, weil durch die Anwendung der Kunststoffstege gemäß Anspruch 17 gleichzeitig auch eine Abdichtung der Fugen gegenüber den Umwelteinflüssen und eine Fixierung der Verbindungslappen gegeneinander erreicht werden kann. Die Stege erhalten hierdurch noch eine zusätzliche Funktion. Eine weitere Maßnahme zur Sicherung dieser Nahtstelle kann noch darin bestehen, Kunststoffstege im Verbindungsbereich sowohl innen als auch außen im Gehäuse vorzusehen. Diese Kunststoff stege können gemäß einer Weiterbildung nach Anspruch 18 auch durch Kunststoffbrücken miteinander verbunden sein, die durch Durchgangslöcher in den Verbindungslappen geschaffen werden. Hierdurch erhalten die beiden einander gegenüberliegenden Kunststoffstege eine einstückige Kunststofverbindung, die die Stege auch zusätzlich gegen eine Längsbewegung gegenüber dem Metallmantel wegen des hinterschneidenden Kunststoffmaterials sichern. Dieses Prinzip ist entsprechend der Merkmalskombination nach Anspruch 18 auch für alle anderen Kunststoffelemente an dem Motorgehäuse anwendbar, soweit sie nur einander gegenüberliegend an der Innen- und Außenfläche des Metallmantels sitzen.

Dabei ist es besonders zweckmäßig, wenn die Schnittkante der Verbindungslappen auch gleichzeitig in Richtung Metallasche gemäß Anspruch 10 fortgeführt ist und so das mantelseitige Ende der am Metallmantel befestigten Metallasche darstellt.

Die Durchgangslöcher können damit sowohl gemäß Anspruch 18 wegen der durch den Kunststoff gebildeten Hinterschneidungen zu einer Sicherung in Längsrichtung des Kunststoffteils sorgen oder auch gleichzeitig, wie in Anspruch 19 aufgeführt, innen und außen einander gegenüberliegende Kunststoffteile durchgehend miteinander verbinden.

Ein großer Vorteil in der Anwendung des Kunststoffs besteht darin, daß gemäß der Merkmalskombination nach Anspruch 20 alle oben erwähnten Kunststoffelemente innerhalb eines einzigen Formvorganges an das Metallgerüst des Motorgehäuses angeformt werden können. Um nun die erwünschtermaßen großen der Umwelt ausgesetzten offenen Metallflächen vor Korrosion zu schützen, empfiehlt sich in vorteilhafter Weiterbildung die Merkmalskombination nach Anspruch 21. Dabei wird vorgeschlagen, daß die durch Korrosion gefährdeten Schnittkanten des Metalls durch Kunststoffstege oder andere Kunststoffelemente vor Korrosion sichert, so daß die Kunststoffteile gleichzeitig die Funktion des Korrosionsschutzes aber auch die Funktion von gesonderten Bauelementen innerhalb des Gehäuses innehaben. Wie weiter oben schon erläutert, kann dann zusätzlich noch durch die Kunststoffteile für eine Verankerung und erhöhte Festigkeit des Kunststofflagerschildes sowie auch des gerollten Blechmantels gesorgt werden.

Aus der Merkmalskombination nach Anspruch 22 ist eine vorteilhafte Abfolge der einzelnen Verfahrensschritte zu entnehmen, während die Merkmalskombination nach Anspruch 23 das Einklemmen der Dauermagnete in die vorbereiteten Kunststofflaschen schildert.

Ein Ausführungsbeispiel der Erfindung wird nachfolgend anhand der Zeichnung erläutert. Darin zeigt:
- Figur 1: eine vom offenen Ende des Motorgehäuses in das Innere gerichtete Ansicht,
- Figur 2: eine Draufsicht auf das Gehäuse in dessen Lage nach Figur 1,
- Figur 3: in etwa 30° gedrehter Darstellung einen Längsschnitt als 90°-Sektor durch das Gehäuse nach Figur 1,
- Figur 4: eine Draufsicht auf das Gehäuse etwa in der Lage nach Figur 3,

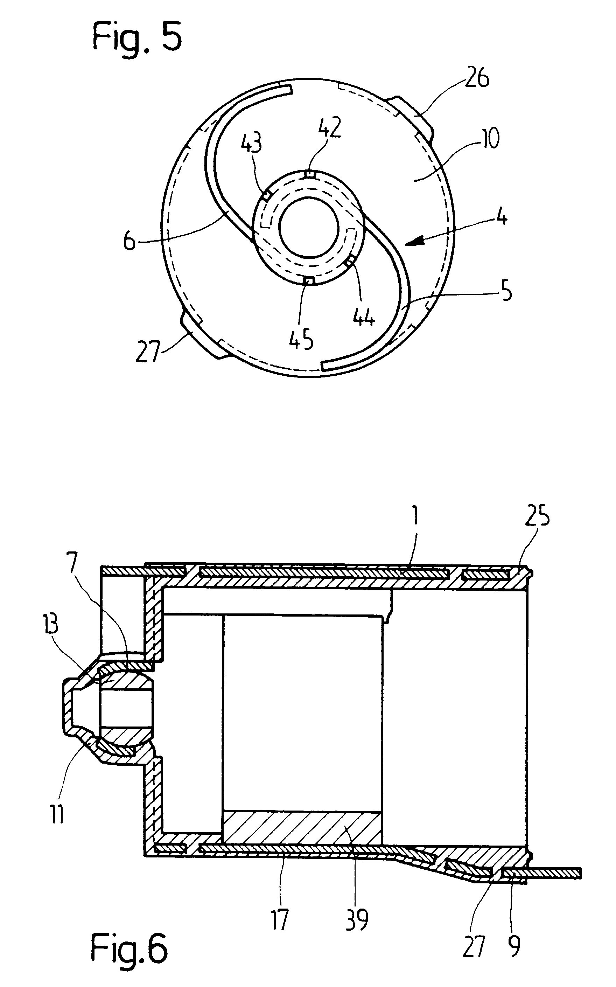

- Figur 5: eine Ansicht auf den Lagerschild des Motors aus der zu Figur 1 entgegengesetzten Richtung und
- Figur 6: einen Schnitt durch das mit einem Sinterlager versehenem Motorgehäuse bei einer Lage des Gehäuses entsprechend Figur 4.

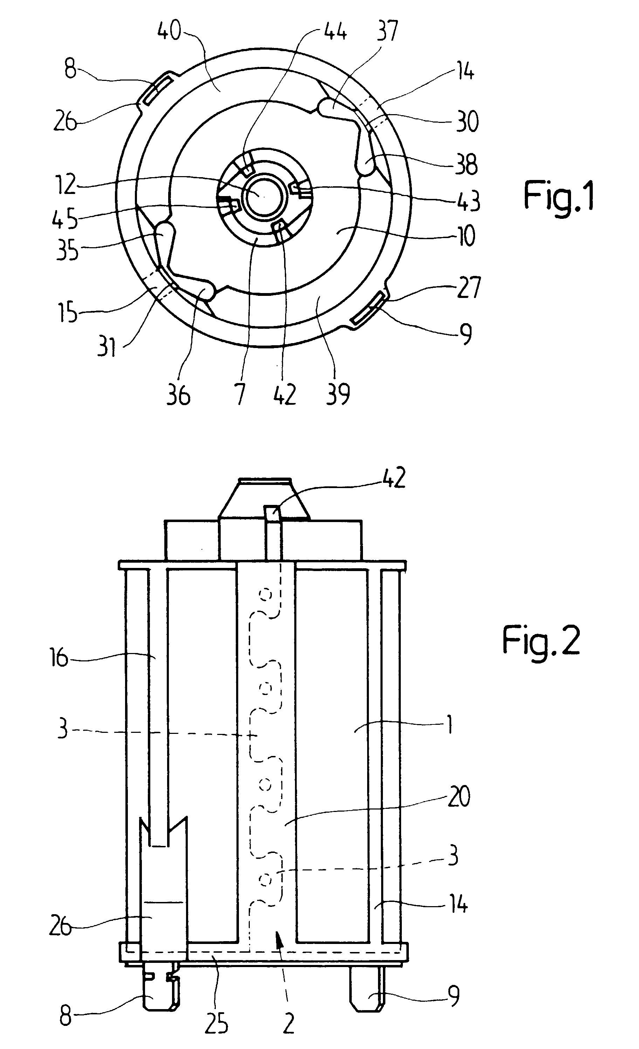

Die Zeichnung zeigt ein im wesentlichen zylinderförmiges Metallmantelteil 1, das durch Rollen eines Blechs gebildet ist. Aus Figur 2 ist der Verbindungsbereich 2 zu erkennen, bei dem die beiden Blechenden ineinander gefügt sind. Dabei sind von beiden Seiten herkommender Verbindungslappen 3 zu erkennen, die sich hinterschneidend in einer Ebene ineinander greifen und so eine im wesentlichen wellenförmige Trennfuge bilden. Es entsteht somit ein gerollter, zylinderförmiger Metallmantelkörper, welcher beidseitig offen ist. Für die Erfindung wichtig ist nun, ein Wärmeableitungsteil 4, das im wesentlichen aus zwei Metallaschen 5 und 6 gebildet ist, die einen überwiegend C-förmigen Verlauf haben. Dabei ist die Krümmung des inneren Schenkels größer als die des äußeren Schenkels der jeweiligen Metallasche 5, 6. Die Metallasche ist aus dem Blech des Metallmantelteils 1 herausgeformt und somit mit diesem einstückig verbunden. Die inneren Schenkel der Metallaschen bilden Abschnitte eines kreisförmigen Metallrings 7, der nicht in sich geschlossen ist.

Am offenen Ende des Metallmantelteils 1 sind aus diesem zwei einander gegenüberliegende Metallappen 8, 9 herausgebogen, die zur Befestigung des Motors beispielsweise an einem Getriebeteil dienen. Die Enden der Metallappen verlaufen außerhalb des Umfangs des Metallmantelteils 1. Auf diese Weise kann ein mit dem Metallmantelteil fluchtendes Getriebeteil an das Metallmantelteil 1 angeflanscht werden.

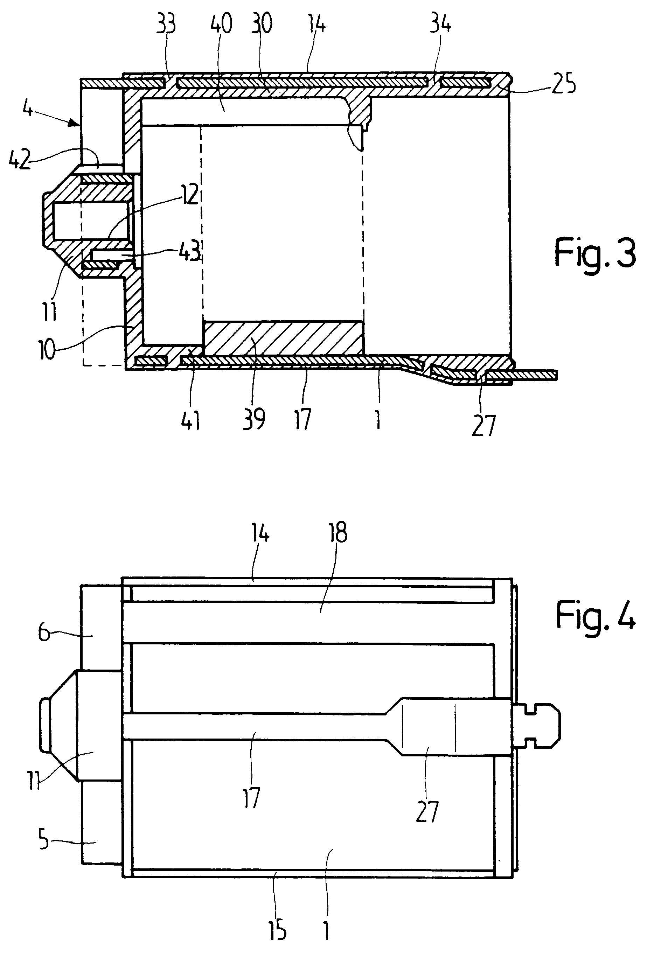

Die bisher beschriebene Konstruktion ist an geeigneten Stellen mit Kunststoffelementen versehen, die in einem einzigen gemeinsamen Formungsvorgang beispielsweise durch Spritzen oder Gießen an das Metallgerüst angeformt sind. Die Kunststoffelemente bestehen im wesentlichen aus einem Kunststoffschild 10, der in einen Lagerkörper 11 aus Kunststoff übergeht. In dem Lagerkörper ist eine Lagerbohrung eingearbeitet, in dem später die Ankerwelle des Elektromotors geführt ist (Figur 3). Es kann in dem Lagerkörper auch ein Sinterlager 13 eingefügt sein. Das die Lagerbohrung 12 umgebende Kunststoffmaterial oder das Sinterlager 13 werden durch den Metallring 7 umgeben, wobei zur verbesserten Wärmeableitung das Sinterlager 13 direkt von dem Metallring 7 gehalten sein kann. Durch einen entsprechenden wannenförmigen Querschnitt des Halterings kann auch für eine Drehlagerung des als Kalottenlager ausgestalteten Sinterlagers gesorgt sein. Gleichzeitig wird erreicht, daß das Sinterlager 13 in Längsrichtung des Metallmantels 1 gehalten ist. Hierdurch kann besonders gut Wärme aus dem Lager des Elektromotors über die Metallaschen 5, 6 in den Metallmantelteil 1 des Motors abgeführt werden.

Zur Erhöhung der Festigkeit und zur Verbesserung der Dichtheit des Motorgehäuses sowie zur Befestigung einiger Elemente ist das Motorgehäuse mit einer Reihe von Stegen versehen, die sich zueinander parallel über die Innenfläche bzw. die Außenfläche des Metallmantels 1 ziehen. Die Stege gehen aus von dem Lagerschild 10 und münden in einem Kunststoffring 25, der die Stirnfläche am offenen Ende des Metallmantels umfaßt.

Hierdurch wird der Lagerschild 10 in Längsrichtung des Metallmantels 1 an diesem festgehalten. Die Stege können aber auch an anderen Elementen, wie beispielsweise einen die Metallappen 8, 9 jeweils umgebenden Kunststoffmantel 26, bzw. 27 münden, wie dies hinsichtlich der Stege 16 und 17 der Fall ist. Zu den Stegen 14 bis 24 gehört auch noch der Steg 20, welcher gleichzeitig die Dichtung der Nahtstelle zwischen den beiden Blechenden übernimmt und so dafür sorgt, daß keine Feuchtigkeit über die Stoßstellen der Verbindungslappen 3 ins Gehäuseinnere gelangen kann.

Unterhalb der äußeren Stege 14, 15 sind auch noch parallel laufende innere Stege 30, 31 vorgesehen. Die äußeren Stege 14, 15 sind mit den inneren Stegen 30, 31 durch Durchgangslöcher 33, 34 miteinander verbunden, so daß die genannten Stege eine Einheit aus Kunststoff bilden, die durch die Hinterschneidungen in den Durchgangslöchern 33, 34 in axialer Bewegungsrichtung des Motorgehäuses gesichert ist. An dieser somit recht festen konstruktiven Einheit sind Kunststofflaschen 35 bis 38 (siehe Figur 1) angeformt, die sich in Längsrichtung des Gehäuses erstrecken. Diese Kunststofflaschen nehmen nach Fertigstellung des Gehäuses die Dauermagnete 39, 40 auf, die in die Laschen eingesteckt werden und jeweils durch zwei zugeordnete Laschen der beiden gegenüberliegenden Laschenpaare gehalten sind.

Das Prinzip der Durchgangslöcher und der durch die Kunststoffhinterschneidungen resultierenden Festigkeit kann auch hinsichtlich des Kunststoffmantels 26 bzw. 27 angewendet werden, wie dies beispielsweise aus Figur 3 ersichtlich ist. Um die Endstellung der Magneten 39, 40 im Innenraum des Gehäuses festzulegen dienen Anschläge 41 (Figur 3), die an den Kunststoff angeformt sind. Aus Figur 1 und 2 sind noch Öffnungen 42, 43, 44, 45 zu erkennen, welche zum Teil von außen bzw. von innen kommend in den Lagerkörper reichen und zur Halterung des Metallgerüstes während des Gießvorgangs dienen.

Um eine korrosionsfreie Blechoberfläche zu erhalten, ist der Metallmantelteil aus stark verzinktem Blech hergestellt, wobei die zur Korrosion neigenden Schnittstellen des Bleches mit Kunststoffelementen bzw. Kunststoffstegen überzogen sind.

## Patentansprüche

1. Motorgehäuse mit im wesentlichen zylinderförmigen Metallmantelteil (1) und mindestens einem Lagerschild (10) aus Kunststoff, wobei der Kunststofflagerschild (10) mit einem Wärmeableitungsteil (4) aus Metall versehen ist, welches in Kontakt zu dem Metallmantelteil (1) steht, dadurch gekennzeichnet, daß der Metallmantelteil (1) einstückig mit dem Wärmeableitungsteil (4) verbunden ist, und daß der Lagerschild (10) an das so gebildete Gerüst aus Metallmantelteil (1) und Wärmeableitungsteil (4) angespritzt ist.

2. Motorgehäuse nach Anspruch 1, dadurch **gekennzeichnet,** daß an den Lagerschild (10) ein Kunststofflagerkörper (11) vorzugsweise unter Aufnahme eines Sinterlagers (13) angeformt ist.

3. Motorgehäuse nach einem der vorangegangenen Ansprüche, dadurch **gekennzeichnet,** daß der Lagerschild (10) des Gehäuses (1,4,10) durch eine Anzahl sich in Längsrichtung des Mantels (1) erstreckende und die Stirnflächen des Mantelteils hintergreifende Stege (14 bis 24, 30,31) gegenüber dem Metallmantel (1) gesichert ist.

4. Motorgehäuse nach Anspruch 3, dadurch **gekennzeichnet**, daß auf der dem Schild (10) abgewandten Seite des Metallmantelteils (1) ein Kunststoffring (25) vorgesehen ist, der die zugeordnete Stirnfläche des Metallmantes (1) hintergreift und in den die Stege (14 bis 24, 30, 31) münden.

5. Motorgehäuse nach einem der Ansprüche 3 oder 4, dadurch **gekennzeichnet,** daß zumindest zwei der Stege (30, 31) sich einander gegenüberliegend längs der Innenfläche des Metallmantels (1) erstrecken.

6. Motorgehäuse nach einem der vorangegangenen Ansprüche, dadurch **gekennzeichnet,** daß sich in Längsrichtung der inneren Mantelfläche erstreckende Kunststofflaschen (35 bis 38) zur Halterung der Magnete durch einen Spritzvorgang an die einstückige Verbindung zwischen Wärmeableitteil (4) und Metallmantel (1) angespritzt sind.

7. Motorgehäuse nach Anspruch 5 und 6, dadurch **gekennzeichnet,** daß die Innenstege (30, 31) mit den Laschen (35 bis 38) einstückig verbunden sind.

8. Motorgehäuse nach einem der vorangegangenen Ansprüche, dadurch **gekennzeichnet,** daß von dem Lagerschild (10) zumindest ein Vorsprung (40) aus Kunststoff in den Innenraum des Motorgehäuses ragt und als Anschlag für den oder die Magnete (39, 40) dient.

9. Motorgehäuse nach einem der vorangegangenen Ansprüche, dadurch **gekennzeichnet,** daß am offenen Ende des Metallmantelteils (1) zwei von dem Mantel abgehende und von diesem abstehende Metallappen (8, 9) aufweist, von denen zumindest ein Abschnitt mit einem Kunststoffmantel (26, 27) versehen ist.

10. Motorgehäuse nach einem der vorangegangenen Ansprüche, dadurch **gekennzeichnet,** daß das Wärmeableitteil (4) durch mindestens eine Metallasche (5, 6) gebildet ist, die aus dem Metallmantel (1) kommend zum Lagerkörper (11) des Gehäuses im Lagerschild (10) reicht.

11. Motorgehäuse nach Anspruch 10, dadurch **gekennzeichnet**, daß zwei Metallaschen (5, 6) vorgesehen sind, die einen überwiegend C-förmigen Verlauf haben, wobei die dem Lager zugewandten Krümmungsabschnitte Teile eines im wesentlichen kreisförmigen Metallrings (7) bilden.

12. Motorgehäuse nach Anspruch 10 und 11, dadurch **gekennzeichnet,** daß der Metallring (7) durch den Kunststoff des Kunststofflagerkörpers (11) weitgehend umgeben ist.

13. Motorgehäuse nach Anspruch 2 und 10, dadurch **gekennzeichnet,** daß der Metallring das Sinterlager (13) umfaßt.

14. Motorgehäuse nach Anspruch 13, dadurch **gekennzeichnet**, daß das Sinterlager (13) ein Kalottenlager ist und der Metallring (7) zur Aufnahme des Lagers (13) einen wannenförmigen Querschnitt besitzt.

15. Motorgehäuse nach Anspruch 8, dadurch **gekennzeichnet**, daß der Mantel (26, 27) einstückig mit einem Kunststoffsteg (16, 17) verbunden ist.

16. Motorgehäuse nach einem der vorangegangenen Ansprüche, dadurch **gekennzeichnet,** daß der Metallmantel (1) ein gerolltes Blechteil ist, wobei der Verbindungsbereich (2) durch einander hintergreifender Verbindungslappen (3) ausgestaltet ist.

17. Motorgehäuse nach Anspruch 16, dadurch **gekennzeichnet**, daß der Verbindungsbereich (2) von einem Kunststoffsteg (20) von außen überdeckt ist.

18. Motorgehäuse nach einem der vorangegangenen Ansprüche, dadurch **gekennzeichnet**, daß in dem Metallmantelteil (1) in den mit Kunststoff abgedeckten Bereichen, insbesondere im Bereich der Stege (14 bis 24) und/oder der Verbindungslappen (3) und/oder Kunststoffmäntel (26, 27) oder Kunststofflaschen (35 bis 38) Durchgangslöcher (33, 34) vorgesehen sind, die durch Kunststoff ausgefüllt sind.

19. Motorgehäuse nach Anspruch 18, dadurch **gekennzeichnet**, daß über die Kunststoffbrücken in den Durchgangslöchern (33, 34) an der Mantelfläche innen und außen gegenüberliegende Kunststoffausformungen wie Stege, Laschenansätze miteinander durchgehend verbunden sind.

20. Motorgehäuse nach einem der vorangegangenen Ansprüche, dadurch **gekennzeichnet,** daß die einzelnen Kunststoffausformungen wie Lagerschild (10), Lager (12, 13), Stege (14 bis 24), Mäntel (26, 27), Laschen (35 bis 38) durch einen allen gemeinsamen, einzigen Kunststoffgieß- bzw. Spritzvorgang gebildet sind.

21. Motorgehäuse nach einem der vorangegangenen Ansprüche, dadurch **gekennzeichnet,** daß die Metallteile aus verzinktem Blech gebildet sind.

22. Verfahren durch Herstellung eines Motorgehäuses nach einem der vorangegangenen Ansprüche, dadurch **gekennzeichnet**, daß zuerst die Einheit aus Metallmantelteilen (1), Wärmeableitungsteil (4) und ggf. anderen Metallteilen (8, 9) geformt, danach ggf. das Sinterlager (13) eingesetzt und dann in einem einzigen Spritzvorgang alle Kunststoffteile angeformt werden.

23. Verfahren nach Anspruch 22, dadurch **gekennzeichnet**, daß nach dem Anformen der Laschen (35 bis 38) die Magnete (39, 40) in das Motorgehäuse eingesetzt werden.

## Claims

1. A motor housing including a substantially cylindrical metal casing element (1) and at least one bearing plate (10) made of plastic material, the plastic bearing plate (10) having a metal heat dissipation element (4) which is in contact with the metal casing element (1),
**characterised** in that the bearing plate (10) is injection-moulded to the integral connection between the heat dissipation element (4) and the metal casing element (1).

2. A motor housing as claimed in claim 1,
**characterised** in that a plastic bearing element (11) is formed on the bearing plate (10), preferably, by the insertion of a sintered-metal bearing (13).

3. A motor housing as claimed in any one of the preceding claims,
**characterised** in that the bearing plate (10) of the housing (1, 4, 10) is secured in position with respect to the metal casing (1) by a number of webs (14 to 24, 30, 31) which extend in the longitudinal direction of the casing (1) and back grip the end surfaces of the casing element.

4. A motor housing as claimed in claim 3,
**characterised** in that a plastic ring (25) is provided on the side of the metal casing element (1) remote from the bearing plate (10) and back grips the associated end surface of the metal casing (1), the webs (14 to 24, 30, 31) terminating into the plastic ring.

5. A motor housing as claimed in any one of claims 3 or 4,
**characterised** in that at least two of the webs (30, 31) extend opposite to one another along the inner surface of the metal casing (1).

6. A motor housing as claimed in any one of the preceding claims,
**characterised** in that plastic lugs (35 to 38) which extend in the longitudinal direction of the inside casing surface are injection-moulded to the integral connection between the heat dissipation element (4) and the metal casing (1) for the purpose of retaining the magnets.

7. A motor housing as claimed in claims 5 and 6,
**characterised** in that the inside webs (30, 31) are integrally connected with the lugs (35 to 38).

8. A motor housing as claimed in any one of the preceding claims,
**characterised** in that at least one projection (40) made of plastics projects from the bearing plate (10) into the interior of the motor housing and serves as a stop for the magnet(s) (39, 40).

9. A motor housing as claimed in any one of the preceding claims,
**characterised** in that, at the open end of the metal casing element (1), two metal tabs (8, 9) project from the casing, and at least one portion of the tabs includes a plastic casing (26, 27).

10. A motor housing as claimed in any one of the preceding claims,
**characterised** in that the heat dissipation element (4) is formed of at least one metal lug (5, 6) which extends from the metal casing (1) to the bearing element (11) of the housing in the bearing plate (10).

11. A motor housing as claimed in claim 10,
**characterised** in that two metal lugs (5, 6) having a predominantly C-shaped configuration are provided, the curved portions facing the bearing forming parts of a substantially circular metal ring (7).

12. A motor housing as claimed in claims 10 and 11,
**characterised** in that the metal ring (7) is largely encompassed by the plastic material of the plastic bearing element (11).

13. A motor housing as claimed in claims 2 and 10,
**characterised** in that the metal ring comprises the sintered metal bearing (13).

14. A motor housing as claimed in claim 13,
**characterised** in that the sintered metal bearing (13) is a calotte-type bearing, and the metal ring (7) has a trough-shaped cross-section for accommodating the bearing (13).

15. A motor housing as claimed in claim 8,
**characterised** in that the casing (25, 27) is connected integrally with the plastic web (16, 17).

16. A motor housing as claimed in any one of the preceding claims,
**characterised** in that the metal casing (1) is a rolled sheet-metal part, the connecting area (2) being provided by connecting tabs (3) back gripping each other.

17. A motor housing as claimed in claim 16,
**characterised** in that the connecting area (2) is covered on the outside by a plastic web (20).

18. A motor housing as claimed in any one of the preceding claims,
**characterised** in that through-holes (33, 34), filled with plastic material, are provided in the metal casing element (1) in the areas covered with plastic material, in particular in the area of the webs (14 to 24) and/or the connecting tabs (3) and/or the plastic casings (26, 27) or plastic lugs (35 to 38).

19. A motor housing as claimed in claim 18,
**characterised** in that, by way of the plastic bridges in the through-holes (33, 34), shaped plastic parts, disposed inwardly and outwardly on the casing periphery opposite each other, such as webs or lugs, are interconnected with each other.

20. A motor housing as claimed in any one of the preceding claims,
**characterised** in that the individual shaped plastic parts such as bearing plate (10), bearings (12, 13), webs (14 to 24), casings (26, 27) and lugs (35 to 38) are formed in one single, joint plastic casting or injection moulding operation.

21. A motor housing as claimed in any one of the preceding claims,
**characterised** in that the metal elements are made of zinc-plated sheet metal.

22. A method of manufacturing a motor housing as claimed in any one of the preceding claims,
**characterised** in that first of all the unit comprising metal casing elements (1), the heat dissipation element (4) and, if necessary, other metal elements (8, 9) is formed and, subsequently, the sintered metal bearing (13), if used, is inserted, and then all plastic parts are shaped in one single injection-moulding operation.

23. A motor housing as claimed in claim 22,
**characterised** in that, after shaping the lugs (35 to 38), the magnets (39, 40) are inserted into the motor housing.

## Revendications

1. Carter de moteur comprenant une partie formant enveloppe métallique (1) essentiellement cylindrique et au moins un flasque de palier (10) en matière plastique, le flasque de palier (10) en matière plastique étant pourvu d'une partie de dissipation thermique (4) en métal qui est au contact de la partie formant enveloppe métallique (1), caractérisé en ce que la partie formant enveloppe métallique (1) est réunie d'une seule pièce à la partie de dissipation thermique (4) et en ce que le flasque de palier (10) est formé de manière rapportée par injection sur l'ossature ainsi formée constituée de la partie formant enveloppe métallique (1) et la partie de dissipation thermique (4).

2. Carter de moteur suivant la revendication 1, caractérisé en ce qu'un corps de palier (11) en matière plastique est réalisé de manière rapportée au formage sur le flasque de palier (10), de préférence en logeant un palier fritté (13).

3. Carter de moteur suivant l'une des revendications précédentes, caractérisé en ce que le flasque de palier (10) du carter (1, 4, 10) est immobilisé par rapport à l'enveloppe métallique (1) au moyen d'un certain nombre de barrettes (14 à 24, 30, 31) s'étendant suivant la direction longitudinale de l'enveloppe (1) et s'accrochant derrière les surfaces frontales de la partie formant enveloppe.

4. Carter de moteur suivant la revendication 3, caractérisé en ce qu'il est prévu, sur le côté de la partie formant enveloppe métallique (1) situé à l'opposé du flasque (10), un anneau (25) en matière plastique qui s'accroche derrière la surface frontale associée de l'enveloppe métallique (1) et dans laquelle les barrettes (14 à 24, 30, 31) débouchent.

5. Carter de moteur suivant l'une des revendications 3 ou 4, caractérisé en ce qu'au moins deux des barrettes (30, 31) s'étendent d'une manière opposée l'une à l'autre le long de la surface intérieure de l'enveloppe métallique (1).

6. Carter de moteur suivant l'une des revendications précédentes, caractérisé en ce que des languettes (35 à 38) s'étendant suivant la direction longitudinale de la surface intérieure d'enveloppe et servant à maintenir les aimants sont formées d'une manière rapportée par une opération d'injection sur la liaison d'une seule pièce entre la partie de dissipation thermique (4) et l'enveloppe métallique (1).

7. Carter de moteur suivant la revendication 5 et la revendication 6, caractérisé en ce que les barrettes intérieures (30, 31) sont réunies d'une seule pièce aux languettes (35 à 38).

8. Carter de moteur suivant l'une des revendications précédentes, caractérisé en ce qu'au moins une saillie (40) en matière plastique se dresse dans la cavité du carter de moteur à partir du flasque de palier (10) et sert de butée pour le ou les aimants (39, 40).

9. Carter de moteur suivant l'une des revendications précédentes, caractérisé en ce qu'à l'extrémité ouverte de la partie formant enveloppe métallique (1), il comporte deux pattes métalliques (8, 9) partant de l'enveloppe et s'écartant de celle-ci dont au moins un segment est pourvu d'une enveloppe (26, 27) en matière plastique.

10. Carter de moteur suivant l'une des revendications précédentes, caractérisé en ce que la partie de dissipation thermique (4) est constituée d'au moins une bande métallique (5, 6) qui, en partant de l'enveloppe métallique (1), atteint le corps de palier (11) du carter dans le flasque de palier (10).

11. Carter de moteur suivant la revendication 10, caractérisé en ce qu'il est prévu deux bandes métalliques (5, 6) qui ont un tracé pour la plus grande partie en forme de C, les segments courbes tournés vers le palier formant des parties d'un anneau métallique (7) essentiellement circulaire.

12. Carter de moteur suivant la revendication 10 et la revendication 11, caractérisé en ce que l'anneau métallique (7) est entouré dans une large mesure par la matière plastique du corps de palier (11) en matière plastique.

13. Carter de moteur suivant la revendication 2 et la revendication 10, caractérisé en ce que l'anneau métallique entoure le palier fritté (13).

14. Carter de moteur suivant la revendication 13, caractérisé en ce que le palier fritté (13) est un palier en calotte sphérique et l'anneau métallique (7) présente une section transversale de forme concave pour recevoir le palier (13).

15. Carter de moteur suivant la revendication 8, caractérisé en ce que l'enveloppe (26, 27) est reliée d'une seule pièce à une barrette (16, 17) en matière plastique.

16. Carter de moteur suivant l'une des revendications précédentes, caractérisé en ce que l'enveloppe métallique (1) est une pièce de tôle enroulée, la zone de jonction (2) étant réalisée au moyen de languettes de jonction (3) s'accrochant les unes derrière les autres.

17. Carter de moteur suivant la revendication 16, caractérisé en ce que la zone de jonction (2) est recouverte de l'extérieur par une barrette (20) en matière plastique.

18. Carter de moteur suivant l'une des revendications précédentes, caractérisé en ce que, dans la partie formant enveloppe métallique (1), des trous traversants (33, 34), qui sont remplis de matière plastique, sont prévus dans les zones recouvertes de matière plastique, notamment dans la zone des barrettes (14 à 24) et/ou des languettes de jonction (3) et/ou des enveloppes (26, 27) en matière plastique ou des languettes en matière plastique (35 à 38).

19. Carter de moteur suivant la revendication 18, caractérisé en ce que, par l'intermédiaire de ponts en matière plastique situés dans les trous traversants (33, 34), des formations en matière plastique, telles que barrettes, parties rapportées formant languette, disposées d'une manière opposée à l'intérieur et à l'extérieur sur la surface d'enveloppe sont réunies entre elles d'une manière continue.

20. Carter de moteur suivant l'une des revendications précédentes, caractérisé en ce que les différentes formations en matière plastique, telles que flasque de palier (10), palier (12, 13), barrettes (14 à 24), enveloppes (26, 27), languettes (35 à 38), sont formées au moyen d'une opération unique de coulée ou d'injection de matière plastique commune pour toutes.

21. Carter de moteur suivant l'une des revendications précédentes, caractérisé en ce que les parties métalliques sont en tôle galvanisée.

22. Procédé de fabrication d'un carter de moteur suivant l'une des revendications précédentes, caractérisé en ce qu'on forme d'abord l'ensemble unitaire constitué de la partie formant enveloppe métallique (1), de la partie de dissipation thermique (4) et éventuellement d'autres parties métalliques (8, 9), puis on met éventuellement en place le palier fritté (13) et on réalise alors toutes les parties en matière plastique par formage de manière rapportée dans une opération unique d'injection.

23. Procédé suivant la revendication 22, caractérisé en ce qu'après la réalisation des languettes (35 à 38) par formage d'une manière rapportée, on met les aimants (39, 40) en place dans le carter de moteur.
